# EUROPEAN PATENT APPLICATION

(11) **EP 1 681 749 A1**
(43) Date of publication of application: **19.07.2006**
(21) Application number: 06000727.5
(22) Date of filing: 13.01.2006
(51) Int. Cl.: H01S 3/08

(54) **Laser oscillator**

(30) Priority: 17.01.2005 JP 2005009077
(71) Applicant: FANUC LTD, Minamitsuru-gun, Yamanashi 401-0597 (JP)
(72) Inventor: Takazane, Tetsuhisa FANUCDai3virakaramatsu, Minamitsuru-gun Yamanashi 401-0511 (JP); Murakami, Takafumi Room8-202, Minamitsuru-gun Yamanashi 401-0511 (JP); Maeda, Michinori, Gotenba-shi Shizuoka 412-0042 (JP); Egawa, Akira, Gotenba-shi Shizuoka 412-0043 (JP)
(74) Representative: Schmidt, Steffen J.

(57) **Abstract**

A laser oscillator (10) capable of restraining the generation of a diffracted beam so as to obtain a laser beam with high power and high quality. The laser oscillator has an output mirror (12), a rear mirror (14) and first and second concave mirrors (16,18). These mirrors cooperate together so as to form a laser beam profile (11). First and second beam waists (20,22) are formed in the laser beam profile (11), between the output mirror (14) and the first concave mirror (16) and between the second concave mirror (18) and the rear mirror (14), respectively. The laser oscillator (10) includes a first aperture (24) positioned generally in the middle of an optical path between the output mirror (12) and the first beam waist (20) and a second aperture (26) positioned generally in the middle of the optical path between the first beam waist (20) and the first concave mirror (16). The laser oscillator (10) further includes a third aperture (28) positioned generally in the middle of the optical path between the rear mirror (14) and the second beam waist (22) and a fourth aperture (30) positioned generally in the middle of the optical path between the second beam waist (22) and the second concave mirror (18).

## Description

### BACKGROUND OF THE INVENTION

### 1. Field of the Invention

The present invention relates to a laser oscillator and, more particularly, to a laser oscillator used in a laser processing device for a fusion cutting process.

### 2. Description of the Related Art

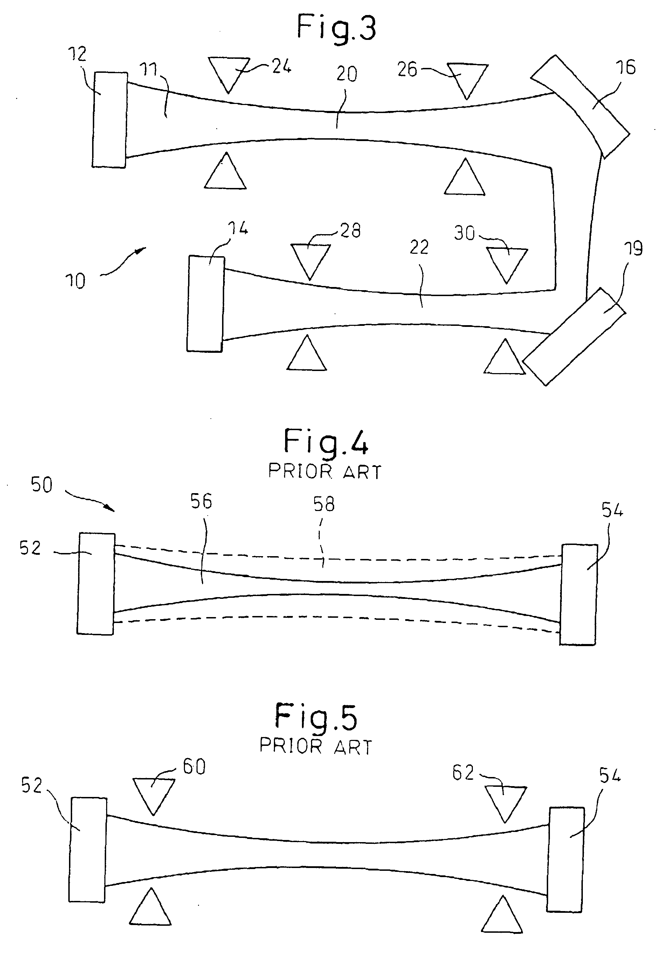

In recent years, a CO₂ laser oscillator for laser cutting, for example, is used as a high-power laser oscillator. However, in a high-power laser oscillator, ASE (Amplified Spontaneous Emission) tends to be generated and this generally deteriorates the quality of a laser beam. This is because, as briefly shown in Fig. 4, in a laser oscillator 50 having an output mirror 52 and a rear mirror 54, a normal beam profile 56 and another beam profile 58 generated by ASE are superimposed. In order to cancel such an inconvenience, an aperture may be arranged in the oscillator. For example, as shown in Fig. 5, by positioning apertures 60 and 62 in front of the output and rear mirrors 52 and 54, respectively, a beam quality, such as an M² value, may be improved. In such a configuration, however, as a diffracted beam is generated at a site of the aperture where the laser beam is irradiated, it is difficult to obtain a laser beam having a sufficient quality for satisfactory cutting.

In order to improve the shape or the configuration of the apertures, many laser devices have been proposed. For example, Japanese Patent Publication No. 2751648 discloses a gas laser device having apertures opposing each other, the apertures having a laser-absorbing material applied to the inner surfaces thereof, so as to restrain development of the diffracted beam. Also, Japanese Patent Publication No. 3301120 discloses a gas laser device including an aperture in the shape of a track to improve the quality of the laser beam. Japanese Unexamined Patent Publication No. 6-350166 discloses a gas laser device including an aperture having a flat edge for restricting a pass of the laser beam. Further, Japanese Unexamined Patent Publication No. 8-204260 discloses a laser oscillator in which an aperture positioned in front of a rear mirror is moved to be in front of a turning mirror so as to improve the quality of the laser beam.

As described above, many ideas in relation to the shape or the configuration of the aperture have been proposed. However, no proposal sufficiently restrains the development of the diffracted beam, resulting in a difficulty in obtaining a laser beam with high power and high quality to improve the cutting performance.

### SUMMARY OF THE INVENTION

Accordingly, it is an object of the present invention to provide a laser oscillator capable of restraining the generation of a diffracted beam so as to obtain a laser beam with a high power and high quality.

To this end, according to the present invention, there is provided a laser oscillator comprising an output mirror and a rear mirror for forming a laser beam profile along an optical path from the output mirror to the rear mirror, wherein the laser oscillator comprises a beam waist forming member for forming a plurality of beam waists in the laser beam profile.

The beam waist forming member may include at least one concave mirrors arranged on the optical path, whereby beam waists are formed in the laser beam profile and each is positioned between the output mirror and the at least one concave mirror and between the rear mirror and the at least one concave mirror.

Preferably, apertures are arranged on the optical path and on both sides in relation to each of the beam waists.

Preferably, each of the apertures is positioned between each of the beam waists and one of the output mirror, the rear mirror and the at least one concave mirror.

Further, a plurality of apertures may be positioned on the optical path and on each side of each of the beam waists such that the plurality of apertures are adjacent to each other. The apertures may be configured such that the laser beam irradiates only one side of each aperture. In this case, it is preferable that the plurality of apertures adjacent to each other have the same size.

Also, the apertures are preferably mounted on one fixed member.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 is a diagram showing a schematic configuration of a major part of a laser oscillator according to the present invention:
Fig. 2 is a diagram showing a modification of the configuration of Fig. 1;
Fig. 3 is a diagram showing another modification of the configuration of Fig. 1;
Fig. 4 is a diagram explaining the generation of ASE in a laser oscillator of the prior art; and
Fig. 5 is a diagram showing a conventional arrangement of apertures in a laser oscillator of the prior art.

### DETAILED DESCRIPTIONS

The present invention will be described below with reference to the drawings.

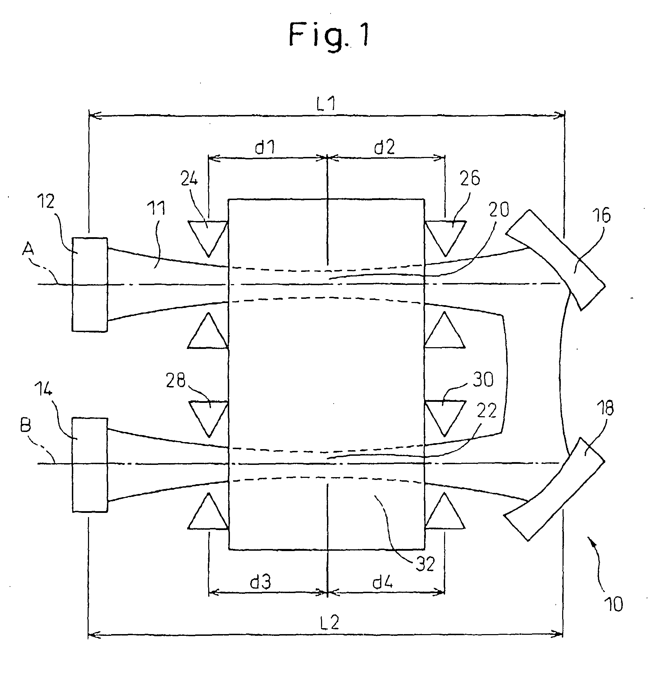

A laser oscillator 10 of the invention, as shown in Fig. 1, includes a partial reflecting mirror or an output mirror 12, a total reflecting mirror or a rear mirror 14 and a beam waist forming member such as first and second concave mirrors 16 and 18. These mirrors cooperate together so as to form a beam profile 11 along an optical path including optical axes A and B. By generating a laser beam using such a configuration, first and second beam waists 20 and 22 are formed in the laser beam profile 11, between the output mirror 12 and the first concave mirror 16 and between the second concave mirror 18 and the rear mirror 14, respectively. The laser oscillator 10 also includes first and second apertures 24 and 26 arranged on the optical axis A and on both sides opposing each other in relation to the beam waist 20. In other words, the first and second apertures 24 and 26 are positioned between the output mirror 12 and the beam waist 20 and between the beam waist 20 and the first concave mirror 16, respectively. Further, the laser oscillator includes third and fourth apertures 28 and 30 arranged on the optical axis B and on both sides opposing each other in relation to the beam waist 22. In other words, the third and fourth apertures 28 and 30 are positioned between the rear mirror 14 and the beam waist 22 and between the beam waist 22 and the second concave mirror 18, respectively.

In the above configuration, it is preferable that the distances d1 and d2 between the beam waist 20 and the first and second apertures 24, 26 are generally equal to one quarter of a distance L1 between the output mirror 12 and the first concave mirror 16 and, more particularly, are within 7/32 to 9/32 of the distance L1. In other words, it is preferable that the first aperture 24 is positioned generally in the middle of the optical path between the output mirror 12 and the beam waist 20 and the second aperture 26 is positioned generally in the middle of the optical path between the beam waist 20 and the first concave mirror 16. Therefore, when the distance L1 is equal to 4000 mm, the distances d1 and d2 are each approximately equal to 1000 mm. Similarly, it is preferable the distances d3, d4 between the beam waist 22 and the third and fourth apertures 28, 30 are approximately equal to 1000 mm when a distance L2 between the rear mirror 14 and the second concave mirror 18 is equal to 4000 mm.

The above configuration may greatly reduce an inconvenient diffracted beam by forming a plurality of beam waists each having a minimum beam diameter on the optical path from the output mirror 12 to the rear mirror 14 and by arranging the apertures on both sides of each beam waist. The gas laser device disclosed in Japanese Patent Publication No. 3301120 includes apertures positioned in front of a total reflecting mirror, a partial reflecting mirror and a turning mirror. However, the aperture positioned in front of the turning mirror is configured such that both of incident beam and reflected beam, in relation to the turning mirror, may pass through the aperture. Therefore, the size or the diameter of the aperture is not optimum for both of the incident beam and the reflected beam. On the other hand, as the aperture is positioned at a suitable position on both sides of the beam waist, the size of the diameter of the aperture is optimum for both beams passing through the aperture in one direction and opposing directions.

Further, as shown in Fig. 1, the first to fourth apertures may be mounted (for example, fixed) to a fixed member or a block 32. By fixing some or all of the apertures to one block, the positional accuracy of each aperture may be raised, resulting in the quality of the laser beam being improved.

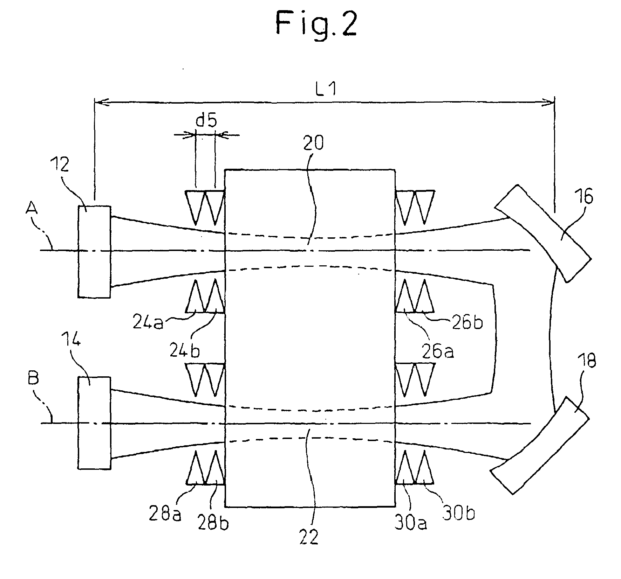

Fig. 2 shows a preferable modification of the embodiment of Fig. 1. In the modification, two apertures 24a and 24b are arranged adjacent to each other, along the optical axis A, instead of the first aperture 24 of the embodiment of Fig. 1. In detail, a distance d5 between the two apertures 24a and 24b is preferably less than approximately 1/30 of the distance L1 between the output mirror 12 and the first concave mirror 16. Also, the diameters of the apertures 24a and 29b are preferably equal to each other. Due to this configuration, the laser beam irradiates only one side of each aperture, whereby the diffracted beam generated at each aperture may be reduced in comparison with when the laser beam irradiates both sides of each aperture. Similarly, two apertures 26a and 26b, having the same diameter, are arranged adjacent to each other, along the optical axis A, instead of the second aperture 26 of the embodiment of Fig. 1. Further, two apertures 28a and 28b, having the same diameter, are arranged adjacent tc each other, along the optical axis B, instead of the third aperture 28 and two apertures 30a and 30b, having the same diameter, are arranged adjacent to each other, along the optical axis B, instead of the fourth aperture 30 of the embodiment of Fig. 1.

Fig. 3 shows another modification of the laser oscillator 10 of the invention. This modification is different from the embodiment of Fig. 1 in that a plane mirror 19 is arranged instead of the second concave mirror 18. At least one concave mirror is necessary for forming a plurality of beam waists in the laser beam profile 11. In the configuration of Fig. 3. beam waists 20 and 22 may be formed between the output mirror 12 and the first concave mirror 16 and between the plane mirror 19 and the rear mirror 14. The beam waist 22 is positioned generally in the middle of an optical path extending from the first concave mirror 16 to rear mirror 14 via the plane mirror 19. Also in this case, the diffracted beam may be reduced by means of the same constitution of the apertures as that of Fig. 1. Further, the modification of Fig. 3 may also have apertures adjacent to each other such as shown in Fig. 2.

In the above embodiment and the modifications, a plurality of apertures are arranged and associated with each beam waist. However, only one aperture may be associated with each beam waist. In addition, it is obvious that three or more beam waists may be formed by using a concave mirror or other beam waist forming member and one or more apertures may associated with each of the beam waists.

According to the invention, the diffracted beam may be greatly reduced, by forming a plurality cf beam waists by means of a beam waist forming member and, then, by arranging one or more apertures between each of the beam waists and one of the output, the rear and the concave mirrors. The diffracted beam may be further reduced by arranging a plurality of apertures adjacent to each other such that the laser beam irradiates only one side of each aperture. In addition, by mounting some or all of the apertures on one fixed member, the positional accuracy of each aperture may be easily increased.

While the invention has been described with reference to specific embodiments chosen for the purpose of illustration, it should be apparent that numerous modifications could be made thereto, by one skilled in the art, without departing from the basic concept and scope of the invention.

## Claims

1. A laser oscillator (10) comprising an output mirror (12) and a rear mirror (14) for forming a laser beam profile (11) along an optical path from the output mirror (12) to the rear mirror (14),
**characterized in that** the laser oscillator comprises a beam waist forming member (16, 18) for forming a plurality of beam waists (20, 22) in the laser beam profile (11).

2. The laser oscillator as set forth in claim 1, wherein the beam waist forming member (16, 18) includes at least one concave mirrors (16, 18) arranged on the optical path, whereby beam waists (20, 22) are formed in each the laser beam profile (11) positioned between the output mirror (12) and the at least one concave mirror (16) and between the rear mirror (14) and the at least one concave mirror (18) ,

3. The laser oscillator as set forth in claim 1, further comprising apertures (24, 2F, 28, 30) arranged on the optical path and on both sides in relation to each of the beam waists (20, 22).

4. The laser oscillator as set forth in claim 3, wherein each of the apertures (24, 26, 28, 30) is positioned between each of the beam waists (20, 22) and one of the output mirror (12), the rear mirror (14) and the at least one concave mirror (16, 18).

5. The laser oscillator as set forth in claim 3, wherein a plurality of apertures (24a, 24b, 26a, 26b, 28a, 26b, 30a, 30b) are positioned on the optical path and on each side of each of the beam waists (20, 22) such that the plurality of apertures are adjacent to each other, the apertures (24a, 29b, 26a, 26b, 28a, 28b, 30a, 30b) being configured such that the laser beam irradiates only one side of each aperture.

6. The laser oscillator as set forth in claim 5, wherein the plurality of apertures (24a, 24b, 26a, 26b, 28a, 28b, 30a, 30b) adjacent to each other have the same size.

7. The laser oscillator as set forth in one of claims 3 to 6, wherein the apertures (24, 26, 28, 30) are mounted on one fixed member (32).
